# FASCICULE DE BREVET EUROPEEN

(11) **EP 2 198 690 B1**
(45) Date de publication et mention de la délivrance du brevet: **18.09.2013**
(21) Numéro de dépôt: 09358010.8
(22) Date de dépôt: 23.11.2009
(51) Int. Cl.: A01G 3/04, A01G 3/053

(54) **Appareil de taille motorisé auto-décoinçant, en particulier taille-haie**
Motor-Schneidegerät mit automatischem Antiblockiersystem, insbesondere Heckenschere
Motorised self-loosening cutting device, particularly for hedge-cutting

(30) Priorité: 01.12.2008 FR 0806734
(43) Date de publication de la demande: 23.06.2010
(73) Titulaire: PELLENC (Société Anonyme), 84120 Pertuis (FR)
(72) Inventeur: Pellenc, Roger, 84120 Pertuis (FR)
(74) Mandataire: Marek, Pierre

(56) Documents cités:
- EP-A- 0 465 117
- FR-A- 2 171 888
- FR-A- 2 548 411
- US-A- 2 548 411
- US-A- 3 236 036
- US-A- 4 722 258

## Description

La présente invention concerne un appareil de taille motorisé auto-décoinçant ou « auto-décoinçable »

De manière très avantageuse, l'invention est applicable aux taille-haies utilisés pour tailler les haies, tant pour leur formation que pour leur entretien. De tels outils portatifs motorisés comportent une barre de coupe comprenant deux lames symétriques accolées l'une à l'autre et munies de dents triangulaires ou trapézoïdales espacées, l'une au moins de ces lames de coupe étant animée d'un mouvement alternatif rectiligne très rapide permettant la coupe par cisaillement des bois engagés entre les dents des lames de la barre de coupe.

Sur ces deux lames, soit les deux sont munies de dents coupantes, soit une seule en dispose.

Les deux lames peuvent être mobiles et animées chacune d'un mouvement alternatif rectiligne et de sens inverse ou une seule des deux lames peut être animée d'un mouvement alternatif rectiligne.

Le mouvement alternatif rectiligne de la lame ou des lames mobiles est généré par un moteur qui peut être électrique ou thermique, voire pneumatique ou hydraulique, dont la sortie est reliée à l'une des extrémités de la lame de coupe mobile ou de chaque lame de coupe mobile, par l'intermédiaire d'une réduction, d'un excentrique ou de deux excentriques et de une ou deux bielles permettant de transformer le mouvement rotatif du moteur d'entraînement en un mouvement alternatif rectiligne de la ou des lames de coupe mobiles.

Cependant, l'invention peut être appliquée à d'autres types d'outils ou machines de taille, tels que, par exemple aux outils de coupe décrits dans les documents EP-0147344 et FR-2730378 comprenant des organes de coupe circulaires superposés munis de dents périphériques et dont l'un au moins est entraîné en rotation par un moteur, lesdits organes de coupe étant agencés de manière complémentaire et associés pour constituer un système de lames coupantes et de contre-lames produisant une coupe par cisaillement.

Un important inconvénient des outils de taille motorisés actuels, notamment des taille-haies à barre de coupe du genre susmentionné, réside dans le fait que leur moteur d'entraînement ne tournant que dans un seul sens, lorsqu'un bois trop gros ou trop dur pénètre entre les dents des lames de coupe et ne peut être coupé par manque de puissance, l'excentrique ne peut atteindre son point extrême permettant l'inversion du sens de déplacement des lames de coupe, le dispositif se bloque et s'arrête. Il est alors impossible de le débloquer sans dégager le bois coincé entre les dents des lames de coupe, en tirant fortement dessus, en s'exposant ainsi à des risques de détérioration mécanique des appareils et de blessures des utilisateurs. En outre, ces coincements, entraînant des arrêts de fonctionnement intempestifs des appareils, sont très contraignants pour les opérateurs.

L'invention propose de mettre à la disposition des utilisateurs, des appareils de taille motorisés et, en particulier des taille-haies, dont le fonctionnement est exempt des inconvénients susmentionnés.

Selon l'invention, cet objectif est atteint grâce à un appareil de taille comportant deux lames accolées l'une à l'autre et munies de dents espacées, l'une de ces lames au moins étant mobile, et reliée à un dispositif de motorisation grâce auquel il est possible de lui communiquer un mouvement dans deux directions de sens contraire, de sorte à permettre la coupe par cisaillement des bois s'engageant entre lesdites dents, ledit appareil de taille étant notamment remarquable en ce qu'il comporte un moyen de pilotage du dispositif de motorisation, ce moyen de pilotage étant agencé ou configuré pour détecter les arrêts du mouvement de la ou des lames mobiles dûs à un blocage de celle(s)-ci, en cours de travail, et pour commander instantanément et automatiquement l'inversion du sens de rotation dudit dispositif de motorisation et donc, l'inversion du sens de déplacement de ladite ou desdites lames mobiles, et l'écartement des dents des lames accolées.

En cas de blocage, cette inversion permet aux parties coupantes des dents des lames de se dégager du bois coincé en s'éloignant l'une de l'autre sous l'action de ou des excentriques jusqu'à atteindre leur point extrême permettant l'inversion du sens de déplacement des lames de coupe, puis de revenir à nouveau l'une vers l'autre. Dans ce cas, soit le bois est complètement sectionné et le travail se poursuit normalement, soit il se produit un nouveau blocage. Alors, le sens de rotation du dispositif de motorisation est de nouveau automatiquement inversé, et ce jusqu'à la disparition complète du blocage persistant et poursuite normale du travail, sans que l'utilisateur ait eu conscience de l'existence d'un problème de blocage.

L'invention permet de supprimer les arrêts intempestifs découlant de l'engagement de bois trop durs ou de trop gros diamètre pour être coupés entre les dents du système de coupe.

Elle permet aussi de supprimer les risques de déterioriation mécanique des appareils de taille et de blessure des opérateurs, lors de la rencontre, en cours de travail, de bois trop gros et/ou trop durs pour être coupés et devant être dégagés des dents du système de coupe en tirant fortement dessus.

De manière avantageuse, l'invention est applicable, comme indiqué précédemment, aux tailles-haies portatifs motorisés du genre comportant une barre de coupe comprenant deux lames symétriques accolées l'une à l'autre et munies de dents triangulaires ou trapézoïdales espacées, l'une au moins de ces lames de coupe étant mobile et pouvant être animée d'un mouvement alternatif rectiligne permettant la coupe par cisaillement des bois engagés entre les dents des lames de la barre de coupe.

IL faut noter que quelque soit le sens de rotation du moteur, horaire ou antihoraire, le mouvement alternatif relatif entre les deux lames, transmis par le ou les excentriques, reste identique.

Selon un mode d'exécution préféré, le dispositif de motorisation de ce taille-haie est constitué par un moteur électrique sans balais, à commande électronique, connu sous le nom de moteur « Brushless », et le moyen de pilotage de ce moteur est constitué par une carte électronique configurée aussi pour détecter d'une part les arrêts de la rotation du moteur dûs à l'immobilisation de la lame mobile ou des lames mobiles et d'autre part pour commander l'inversion du sens de rotation dudit moteur.

On comprend que, lorsque le système de lame et contre-lame se bloque dans un bois trop gros et/ou trop dur pour être coupé lors du premier mouvement de rapprochement des dents entre lesquelles est engagé ce bois, les excentriques actionnant la ou les dites lames ne peuvent plus tourner ce qui empêche la rotation du moteur.

La carte électronique de gestion du pilotage du moteur détecte que celui-ci ne répond plus aux ordres de rotation (rotation nulle et/ou surintensité) et en déduit qu'il y a blocage des lame et contre-lame, cette même carte ordonne alors instantanément et automatiquement au moteur de changer de sens de rotation.

L'inversion de sens de rotation a pour effet de permettre la rotation des excentriques provoquant l'éloignement des dents de la lame par rapport aux dents de la contre-lame les libérant ainsi du bois dans lequel elles se trouvent coincées.

Par l'effet des excentriques, les dents des lames et contre lames se rapprochent ensuite à nouveau et vont encore essayer de couper le bois :
- si le bois était presque coupé, le fait de revenir avec une vitesse maximale engendrant une certaine inertie peut permettre à la lame et à la contre-lame de couper le bois et l'outil continue de travailler normalement.
- si le bois n'est pas coupé lors du retour, il y a à nouveau blocage et la procédure décrite plus haut est de nouveau mise en oeuvre.
- si après un nombre déterminé d'essais infructueux de décoincement (par exemple dix) le bois n'est toujours pas coupé, par sécurité la carte électronique de gestion du pilotage du moteur donnera l'ordre à celui-ci de stopper.

Les buts, caractéristiques et avantages ci-dessus, et d'autres encore, ressortiront de la description qui suit et des dessins annexés dans lesquels :

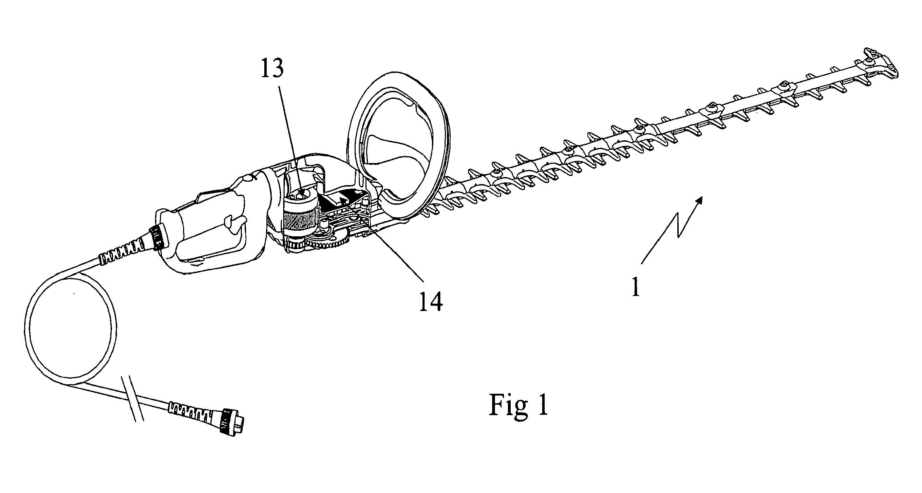

La figure 1 est une vue en perspective d'un exemple de réalisation d'un appareil de taille faisant application de l'invention et qui, selon cet exemple, est constitué par un taille-haie.

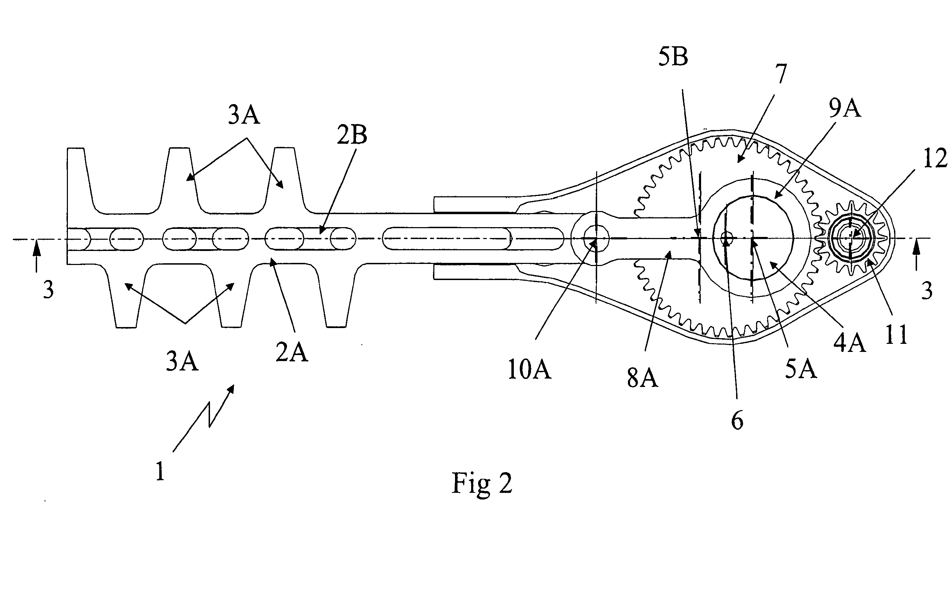

La figure 2 est une vue en plan de la barre de coupe de cet appareil et du mécanisme assurant le mouvement alternatif rectiligne et de sens inverse des deux lames de coupe mobiles de ladite barre de coupe, lesdites lames de coupe étant représentées dans l'une de leurs deux positions extrêmes.

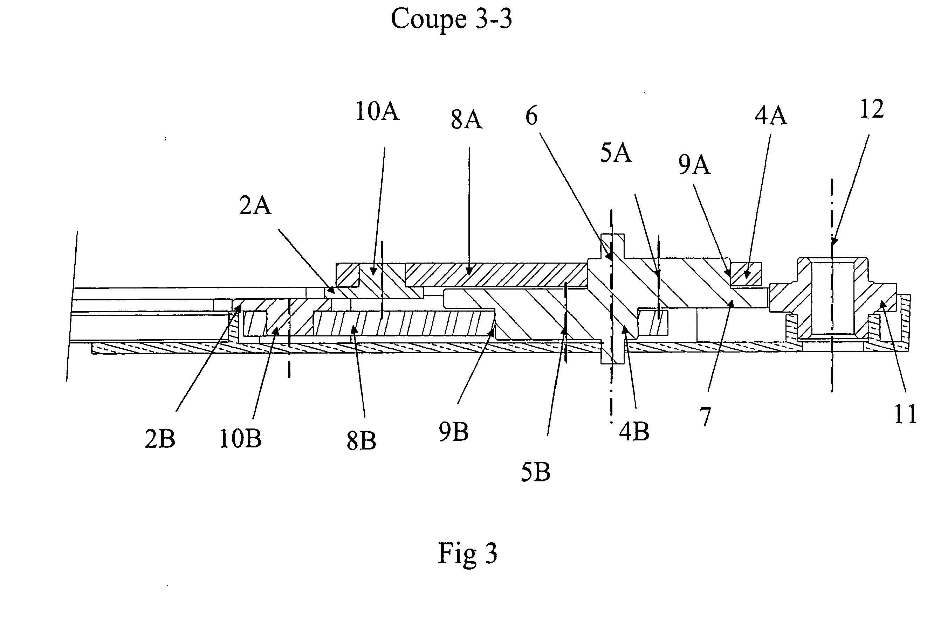

La figure 3 est une vue à plus grande échelle et en coupe longitudinale, selon la ligne 3-3 de la figure 2.

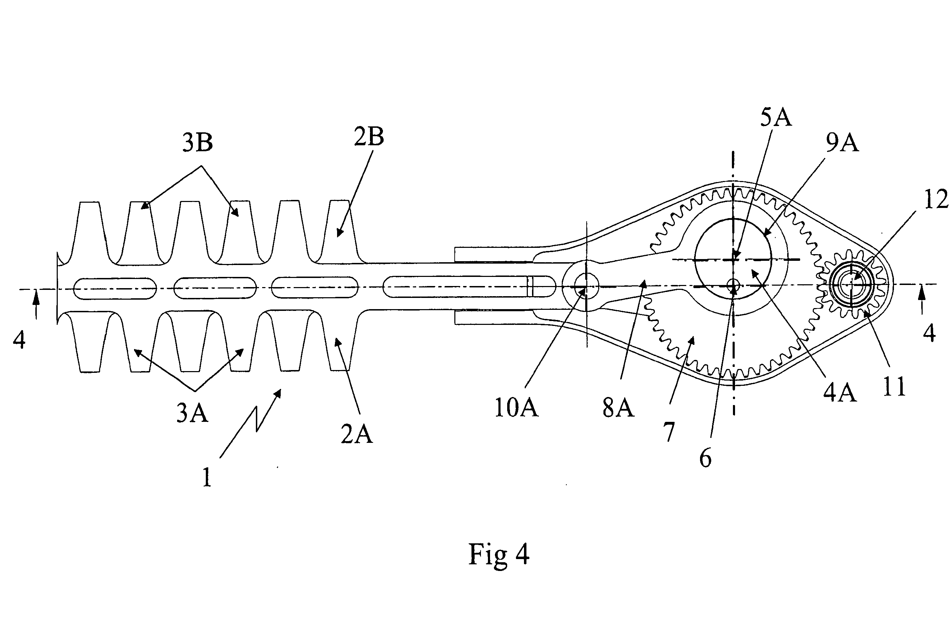

La figure 4 est une vue en plan semblable à la figure 2 et montrant les lames de coupe dans l'une de leurs deux positions intermédiaires.

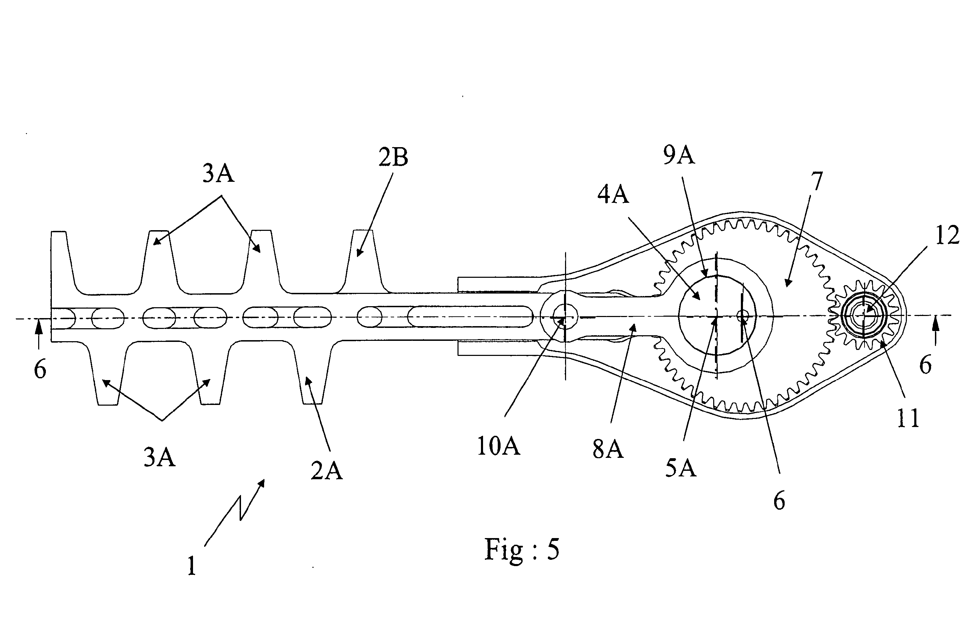

La figure 5 est une vue en plan semblable à la figure 2 et illustrant les lames de coupe dans leur deuxième position extrême.

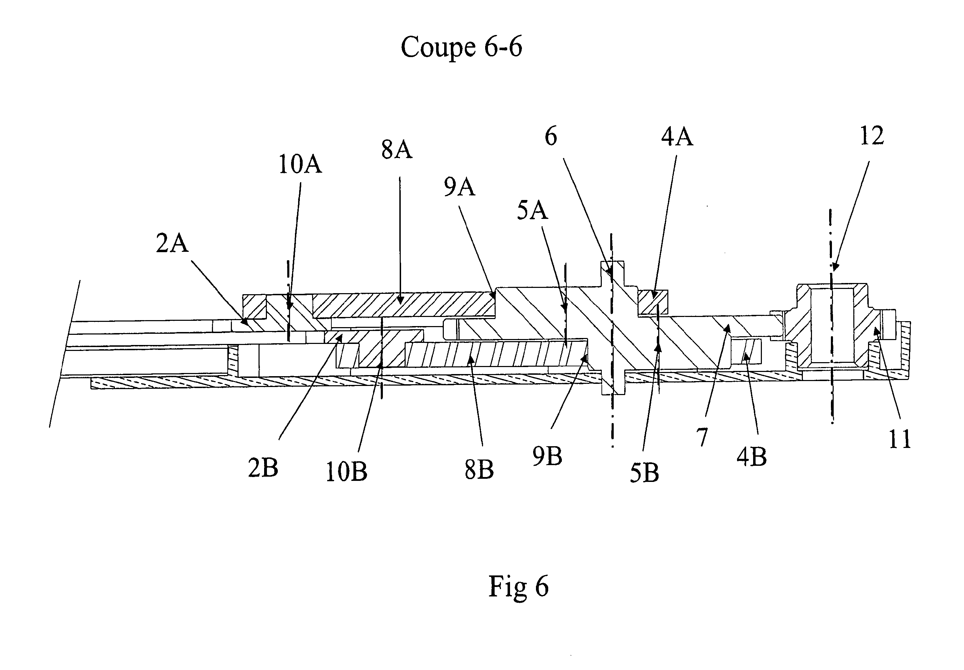

La figure 6 est une vue à plus grande échelle et en coupe longitudinale, selon la ligne 6-6 de la figure 5.

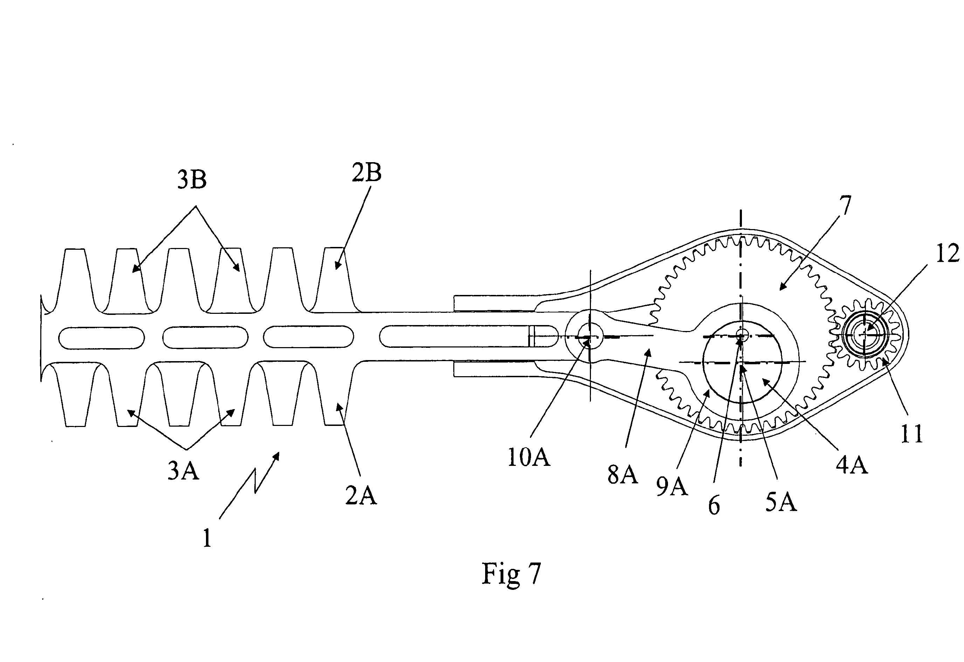

La figure 7 est une vue en plan semblable à la figure 4 et illustrant le mécanisme d'entraînement des lames de coupe dans une position correspondant à la seconde position intermédiaire de celles-ci.
La figure 8 est une vue en plan d'un exemple de réalisation d'un outil de taille circulaire auquel peut être également appliquée l'invention.

On se réfère auxdits dessins pour décrire des exemples de réalisation intéressants, quoique nullement limitatifs, de l'appareil de taille auto-décoinçant ou « auto-décoinçable » selon l'invention.

Dans la suite du présent exposé et dans les revendications, on utilisera le néologisme « auto-décoinçable » qui signifie qui se décoince ou se débloque automatiquement, sans intervention de l'utilisateur, plutôt que le terme auto-décoinçant.

D'autre part, le terme appareil de taille, désigne aussi bien des dispositifs de taille portables motorisés, tels que taille-haies, coupe-herbes, etc. que des outils de coupe destinés à équiper des machines de taille automatisées telles que, par exemple, machines de prétaillage, machines d'élagage, etc.

Le taille-haie représenté à titre d'exemple, comporte une barre de coupe 1 essentiellement constituée de deux lames symétriques superposées 2A, 2B dont les bords longitudinaux opposés sont munis de dents de coupe espacées, respectivement 3A, 3B, de forme triangulaire ou trapézoïdale et à écartement constant. L'une au moins de ces lames 2A, 2B est mobile et peut être animée d'un mouvement alternatif rectiligne permettant la coupe par cisaillement des bois s'engageant entre les dents 3A, 3B desdites lames, en cours de travail.

Selon l'exemple représenté, les deux lames 2A, 2B sont mobiles et animées chacune d'un mouvement alternatif rectiligne et de sens inverse, en cours de fonctionnement de l'appareil.

De préférence, les dents 3A, 3B des deux lames 2A, 2B sont pourvues de bords opposés coupants, mais il serait possible que l'une des deux lames de coupe seulement, soit munie de dents à bords opposés tranchants, l'autre lame étant conformée pour servir de contre-lame permettant une coupe par cisaillement.

Dans l'exposé qui suit, les lames 2A, 2B (ou 15A, 15B) sont indifféremment appelées toutes deux « lames de coupe », qu'il s'agisse de deux lames coupantes ou d'une seule lame tranchante et d'une contre-lame, ces deux lames coopérant pour produire une action de coupe par cisaillement

Le mouvement alternatif rectiligne des lames 2A, 2B est généré par un système de double excentrique et de deux bielles mis en rotation par un moteur et un réducteur.

Ce système comprend deux excentriques 4A, 4B solidaires d'une roue dentée 7 et situés sur les faces opposées de celle-ci, lesdits excentriques étant disposés de sorte que leurs axes propres 5A,5B soient disposés de manière symétrique par rapport à l'axe de rotation 6 de la roue dentée 7.

La bielle 8A, 8B reliée en rotation d'une part au moyen de l'articulation 9A, 9B à chaque excentrique 4A, 4B, et d'autre part au moyen d'une articulation 10A, 10B, à l'extrémité proximale de la lame de coupe correspondante 2A ou 2B, lesdites lames de coupe étant guidées en translation et maintenues appliquées l'une contre l'autre par des moyens connus en soi.

La roue dentée 7 engrène avec un pignon moteur 11 monté fixe sur l'arbre de sortie 12 du dispositif de motorisation de l'appareil pour créer le réducteur.

Ce dispositif peut être constitué par un moteur électrique, ou un moteur thermique, ou un moteur pneumatique, ou un moteur hydraulique.

De préférence, ce moteur 13 est constitué par un moteur électrique de type sans balais couramment désigné sous le nom de moteur « Brushless », à commande électronique.

Selon une importante disposition caractéristique de l'invention, l'appareil comporte un moyen de pilotage du dispositif de motorisation 13, et ce moyen de pilotage est agencé ou configuré pour d'une part détecter les arrêts du mouvement de la ou des lames mobiles 2A, 2B en cours de travail, et d'autre part, pour commander instantanément et automatiquement l'inversion du sens de rotation dudit dispositif et donc, l'inversion du sens de déplacement de la ou desdites lames mobiles.

De manière très avantageuse, ce moyen de pilotage comprend une carte électronique 14, par exemple logée dans un compartiment aménagé dans le carter du moteur 13 ou dans le pack batterie assurant l'alimentation dudit moteur en courant électrique continu.

Cette carte électronique est configurée aussi pour, d'une part détecter les arrêts du mouvement de la ou des lames mobiles 2A, 2B en cours de travail, et d'autre part, pour commander instantanément et automatiquement l'inversion du sens de rotation du moteur électrique « Brushless » 13 ou autre dispositif de motorisation et donc, l'inversion du sens de déplacement de la ou desdites lames mobiles.

Le dispositif de motorisation peut inclure un moteur électrique autre qu'un moteur électrique sans balais (moteur à courant continu ou alternatif avec balais), ou un moteur pneumatique, ou un moteur hydraulique, ou un moteur thermique.

Dans ce cas, on adjoindra au moyen de pilotage du moteur ou dispositif de motorisation un dispositif électrique ou électronique de détection permettant de déceler que la ou les lames mobiles sont bloquées, ce dispositif de détection pouvant être constitué par un détecteur d'effort et/ou de déplacement connu en soi, tel que, par exemple, jauge de contrainte, détecteur optique, etc., relié à la carte électronique de pilotage du moteur ou dispositif de motorisation.

En cas de blocage et en considérant un appareil actionné par un moteur pneumatique ou hydraulique, le détecteur donne l'ordre à la carte électronique de pilotage de changer le sens de rotation dudit moteur en agissant sur les électrovannes de commande pour inverser l'alimentation de ce dernier.

Dans le cas des appareils actionnés par un moteur thermique, on ajoute, après l'embrayage, sur l'axe d'entrée du réducteur entraînant l'excentrique ou les excentriques actionnant la lame ou les lames mobiles, une pignonnerie ou système inverseur, connus en soi, permettant de changer le sens de rotation dudit réducteur, cette pignonnerie ou système inverseur étant commandés électriquement suivant les ordres reçus du détecteur permettant de déceler que la barre de coupe vient de se bloquer.

On comprend aisément que l'invention peut être appliquée à des appareils ou machines autres que ceux comportant des lames de coupe à mouvement alternatif rectiligne.

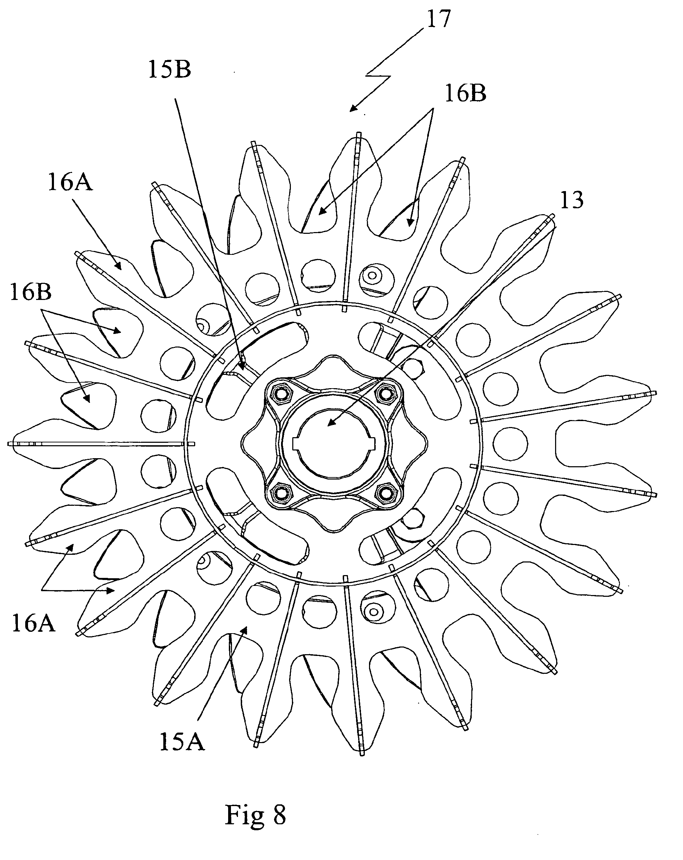

Par exemple, l'invention est applicable à des outils de coupe circulaires du genre décrits dans les documents EP-0147344 et FR-2730378. De tels outils 17 dont un exemple est illustré par la figure 8 comprenant des organes de coupe circulaires superposés 15A, 15B, munis de dents périphériques 16A, 16B, respectivement, et dont l'un 16A au moins est entraîné en rotation par un moteur, lesdits organes de coupe étant agencés de manière complémentaire et associés pour constituer un système de lames coupantes et de contre-lames produisant une coupe par cisaillement.

## Revendications

1. Appareil de taille motorisé comportant deux lames accolées l'une à l'autre (2A, 2B) et munies de dents de coupe triangulaires ou trapézoïdales espacées (3A, 38), l'une de ces lames au moins étant mobile et reliée à un dispositif de motorisation (13) grâce auquel il est possible de lui communiquer un mouvement dans deux directions de sens contraires, de sorte à permettre la coupe par cisaillement des bois s'engageant entre lesdites dents (3A, 3B), **caractérisé en ce qu'**il comporte un moyen de pilotage du dispositif de motorisation, ce moyen de pilotage (14) étant agencé ou configuré pour détecter les arrêts du mouvement de la ou des lames mobiles dûs à un blocage de celle(s)-ci, en cours de travail et pour commander instantanément et automatiquement l'inversion du sens de rotation dudit dispositif de motorisation et donc, l'inversion du sens de déplacement de ladite ou desdites lames mobiles.

2. Appareil de taille motorisé auto-décoinçable, selon la revendication 1, **caractérisé en ce que** le moyen de pilotage du dispositif de motorisation (13) comprend une carte électronique (14) configurée pour commander instantanément et automatiquement l'inversion du sens de rotation dudit dispositif.

3. Appareil de taille motorisé auto-décoinçable, selon la revendication 2, **caractérisé en ce que** le dispositif de motorisation (13) est constitué par un moteur électrique sans balai ou moteur électrique « Brushless » à commande électronique, et **en ce que** la carte électronique (14) de pilotage de ce moteur est configurée pour détecter les arrêts du mouvement de la ou des lames mobiles (2A, 2B) dudit appareil, en cours de travail.

4. Appareil de taille motorisé auto-décoinçable, selon la revendication 2, **caractérisé en ce que** le dispositif de motorisation (13) est constitué par un moteur électrique à courant continu à balais, ou par un moteur à courant alternatif à balais, ou par un moteur pneumatique, ou par un moteur hydraulique, ou par un moteur thermique, et **en ce que** le moyen de pilotage dudit dispositif comprend également un dispositif de détection permettant de déceler que la lame ou les lames mobiles (2A, 2B) sont bloquées et d'adresser cette information à la carte électronique (14).

5. Appareil de taille motorisé auto-décoinçable, selon la revendication 4, **caractérisé en ce que** ledit dispositif de détection est constitué par un détecteur d'effort et/ou de déplacement connu en soi, tel que, par exemple, une jauge de contrainte ou un détecteur optique, relié à la carte électronique (14) de pilotage du moteur.

6. Appareil de taille motorisé auto-décoinçable, selon l'une quelconque des revendications 2 à 5, **caractérisé en ce que** la carte électronique (14) de pilotage du dispositif de motorisation (13) est configurée pour commander l'arrêt de ce dernier, après un nombre déterminé d'essais infructueux de décoincement.

7. Appareil de taille motorisé auto-décoinçable, selon l'une quelconque des revendications 1 à 6, **caractérisé en ce qu'**il est constitué par un taille-haie du genre comportant une barre de coupe (1) comprenant deux lames symétriques (2A, 2B) accolées l'une à l'autre et munies de dents de coupe triangulaires ou trapézoïdales espacées (3A, 3B), l'une au moins de ces lames étant reliée au dispositif de motorisation (13), permettant de lui communiquer un mouvement alternatif rectiligne.

8. Appareil de taille motorisé auto-décoinçable, selon la revendication 7, **caractérisé en ce que** les deux lames symétriques superposées (2A, 2B) accolées l'une à l'autre et munies de dents de coupe triangulaires ou trapézoïdales espacées (3A, 3B) de la barre de coupe (1) sont mobiles et reliées au dispositif de motorisation (13, 4A, 4B, 8A, 8B) permettant de leur communiquer un mouvement alternatif rectiligne et de sens inverse.

9. Appareil de taille motorisé auto-décoinçable, selon l'une quelconque des revendications 1 à 6, **caractérisé en ce qu'**il est réalisé sous forme d'un outil de taille circulaire (17) comprenant des organes de coupe circulaires superposés (15A, 15B) munis de dents périphériques (16A, 16B) et dont l'un (15A) au moins est entraîné en rotation par le dispositif de motorisation (13).

## Patentansprüche

1. Motor-Schneidegerät umfassend zwei miteinander verbundene Klingen (2A, 2B), die mit dreieckig oder trapezförmig angeordneten Schneidzähnen (3A, 3B) ausgestattet sind, wobei wenigstens eine dieser Klingen bewegbar ist und mit einer Antriebseinrichtung (13) verbunden ist, mittels derer eine Bewegung in zwei entgegengesetzte Richtungen ausgeführt werden kann, um so ein Schneiden durch Scherung des Holzes zwischen dem Eingriff der Zähne (3A, 3B) zu ermöglichen, **dadurch gekennzeichnet, dass** es Mittel zum Steuern der Antriebsvorrichtung umfasst, wobei die Steuermittel (14) so angeordnet oder ausgelegt sind, das Stoppen der Bewegung von der oder von den beweglichen Klingen aufgrund einer Blockierung von dieser(n) während des Betriebes zu detektieren und um sofort und automatisch die umgekehrter Drehrichtung der Antriebseinrichtung und somit die Umkehrung der Richtung der Bewegung der einen oder der mehreren beweglichen Klingen zu steuern.

2. Motor-Schneidegerät mit Antiblockiersystem nach Anspruch 1, **dadurch gekennzeichnet, dass** die Mittel zum Steuern der Antriebseinrichtung (13) eine elektronische Karte (14) umfassen, die konfiguriert ist, um sofort und automatisch die Umkehr der Drehrichtung der Antriebseinrichtung zu steuern.

3. Motor-Schneidegerät mit Antiblockiersystem nach Anspruch 2, **dadurch gekennzeichnet, dass** die Antriebseinrichtung (13) einen bürstenlosen Elektromotor oder einen "Brushless" - Elektromotor mit elektronischer Steuerung umfasst, und dass die elektronische Karte (14) zum Steuern des Motors konfiguriert ist, um das Stoppen der Bewegung von der oder von den beweglichen Klingen (2A, 2B) des besagten Gerätes während des Betriebes zu detektieren.

4. Motor-Schneidegerät mit Antiblockiersystem nach Anspruch 2, **dadurch gekennzeichnet, dass** die Antriebseinrichtung (13) als ein elektrischer Gleichstrommotor mit Bürsten oder Wechselstrommotor mit Bürsten oder als ein pneumatischer Motor oder als ein hydraulischer Motor oder als eine Wärmekraftantrieb ausgebildet ist, und dass die Steuermittel des Antriebs ferner eine Detektionsvorrichtung umfassen, die ausgebildet ist zu erkennen, ob die bewegliche Klinge oder die beweglichen Klingen (2A, 2B) blockiert sind und um diese Information an die elektronische Karte (14) zu senden.

5. Motor-Schneidegerät mit Antiblockiersystem nach Anspruch 4, **dadurch gekennzeichnet, dass** die Detektionsvorrichtung durch einen an sich bekannten Kraft- und /oder Weggeber ausgebildet ist, wie zum Beispiel einen Dehnungsmessstreifen oder einen optischen Detektor, der mit der elektronische Karte (14) zur Steuerung des Motors verbunden ist.

6. Motor-Schneidegerät mit Antiblockiersystem nach einem der Ansprüche 2 bis 5, **dadurch gekennzeichnet, dass** die elektronische Karte (14) zum Steuern der Antriebseinrichtung (13) so konfiguriert ist, um das Anhalten nach einer vorbestimmten Anzahl von erfolglosen Loslöseversuchen zu steuern.

7. Motor-Schneidegerät mit Antiblockiersystem nach einem der Ansprüche 1 bis 6, **dadurch gekennzeichnet, dass** es als eine Heckenschere des Typs mit einer Schneidleiste (1) ausgebildet ist, die mit zwei miteinander verbunden symmetrischen Klingen (2A, 2B) ausgestattet ist und die mit dreieckigen oder trapezförmig beabstandeten Schneidezähnen (3A, 3B) versehen sind, wobei mindestens eine dieser Klingen mit der Antriebseinrichtung (13) verbunden ist, die eine geradlinige Hin-und Herbewegung ermöglicht.

8. Motor-Schneidegerät mit Antiblockiersystem nach Anspruch 7, **dadurch gekennzeichnet, dass** die beiden übereinanderliegenden symmetrischen Klingen (2A, 2B), die miteinander verbunden und mit dreieckigen oder trapezförmigen Schneidezähnen (3A, 3B) an der Schneideleiste (1) versehen sind, beweglich sind und mit der Antriebseinrichtung (13, 4A, 4B, 8A, 8B) verbunden sind, um eine geradlinigen Hin-und Herbewegung in die entgegengesetzte Richtung zu ermöglichen.

9. Motor-Schneidegerät mit Antiblockiersystem nach einem der Ansprüche 1 bis 6, **dadurch gekennzeichnet, dass** es als ein kreisförmiges Werkzeug (17) mit kreisförmigen, übereinander gelagerten Schneidelementen (15A, 15B) ausgebildet ist, die umfänglich angeordnete Zähne (16A, 16B) aufweisen und zumindest eine davon (15A) durch die Antriebseinrichtung (13) in Drehung versetzt werden kann.

## Claims

1. A motor-driven trimming apparatus comprising two blades (2A, 2B) which are attached to each other and provided with spaced triangular or trapezoidal cutting teeth (3A, 3B), one of said blades at least being movable and connected to a motor drive device (13), by virtue of which it is possible to impart thereto a movement in two directions in opposite relationship so as to permit shearing cutting of wood which is engaged between said teeth (3A, 3B), **characterised in that** it comprises a means for pilot control of the motor drive device, said pilot control means (14) being arranged or adapted to detect stoppages of the movement of the movable blade or blades due to a blockage thereof in the course of operation and to instantly and automatically control reversal of the direction of rotation of said motor drive device and therefore reversal of the direction of displacement of said movable blade or blades.

2. A self-unjamming motor-driven trimming apparatus according to claim 1 **characterised in that** the means for pilot control of the motor drive device (13) comprises an electronic card (14) adapted to instantly and automatically control reversal of the direction of rotation of said device.

3. A self-unjamming motor-driven trimming apparatus according to claim 2 **characterised in that** the motor drive device (13) is formed by an electric brushless motor with electronic control and that the electronic card (14) for pilot control of said motor is adapted to detect stoppages of the movement of the movable blade or blades (2A, 2B) of said apparatus in the course of operation.

4. A self-unjamming motor-driven trimming apparatus according to claim 2 **characterised in that** the motor drive device (13) is formed by a dc electric brush motor or by an ac brush motor or by a pneumatic motor or by a hydraulic motor or by a thermal motor and that the means for pilot control of said device also comprises a detection device capable of sensing that the movable blade or blades (2A, 2B) are blocked and passing said information to the electronic card (14).

5. A self-unjamming motor-driven trimming apparatus according to claim 4 **characterised in that** the detection device is formed by a per se known force and/or displacement detector such as for example a strain gauge or an optical detector connected to the electronic card (14) for pilot control of the motor.

6. A self-unjamming motor-driven trimming apparatus according to one of claims 2 to 5 **characterised in that** the electronic card (14) for pilot control of the motor drive device (13) is adapted to control stoppage of the latter after a given number of unsuccessful unjamming attempts.

7. A self-unjamming motor-driven trimming apparatus according to any one of claims 1 to 6 **characterised in that** it is formed by a hedge trimmer of the kind comprising a cutter bar (1) comprising two symmetrical blades (2A, 2B) which are attached to each other and which are provided with spaced triangular or trapezoidal cutting teeth (3A, 3B), one at least of said blades being connected to the motor drive device (13) permitting an alternating rectilinear movement to be imparted thereto.

8. A self-unjamming motor-driven trimming apparatus according to claim 7 **characterised in that** the two superposed symmetrical blades (2A, 2B) which are attached to each other and which are provided with spaced triangular or trapezoidal cutting teeth (3A, 3B) of the cutter bar (1) are movable and connected to the motor drive device (13, 4A, 4B, 8A, 8B) permitting an alternating rectilinear movement in the reverse direction to be imparted thereto.

9. A self-unjamming motor-driven trimming apparatus according to any one of claims 1 to 6 **characterised in that** it is in the form of a circular trimming tool (17) comprising superposed circular cutting members (15A, 15B) provided with peripheral teeth (16A, 16B) and of which one (15A) at least is driven in rotation by the motor drive device (13).
